(19) Europäisches Patentamt / European Patent Office / Office européen des brevets

(11) EP 2 717 074 B1

(12) EUROPEAN PATENT SPECIFICATION

(45) Date of publication and mention of the grant of the patent:
**27.02.2019 Bulletin 2019/09**

(21) Application number: **12793233.3**

(22) Date of filing: **22.05.2012**

(51) Int Cl.:
*G02B 5/30* (2006.01) *C09B 31/072* (2006.01)
*C09B 45/08* (2006.01) *C09B 45/24* (2006.01)
*C09B 45/26* (2006.01) *G02F 1/1335* (2006.01)

(86) International application number:
**PCT/JP2012/063047**

(87) International publication number:
**WO 2012/165222 (06.12.2012 Gazette 2012/49)**

# (54) DYE-BASED POLARIZING ELEMENT AND POLARIZING PLATE

FARBSTOFFBASIERTES POLARISIERENDES ELEMENT UND POLARISATIONSPLATTE

PLAQUE ET ÉLÉMENT DE POLARISATION À BASE DE COLORANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2011 JP 2011120720**

(43) Date of publication of application:
**09.04.2014 Bulletin 2014/15**

(73) Proprietors:
- **Nippon Kayaku Kabushiki Kaisha**
  **Tokyo 102-8172 (JP)**
- **Polatechno Co., Ltd.**
  **Joetsu-shi, Niigata 944-0101 (JP)**

(72) Inventors:
- **MOCHIZUKI Noriaki**
  **Tokyo 115-8588 (JP)**
- **HIGETA Takahiro**
  **Tokyo 115-8588 (JP)**
- **NISHIGUCHI Takuto**
  **Tokyo 115-8588 (JP)**

(74) Representative: **Gille Hrabal**
**Brucknerstrasse 20**
**40593 Düsseldorf (DE)**

(56) References cited:
**JP-A- 3 000 769** **JP-A- 5 053 014**
**JP-A- 5 053 015** **JP-A- 57 145 155**
**JP-A- 62 190 272** **US-A- 5 354 512**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 717 074 B1

## Description

### Technical Field

The present invention relates to a method for producing a dye-based polarizing element.

### Background of the Invention

A polarizing element is generally produced by adsorbing and orienting iodine, which is a dichromatic pigment, or a dichromatic dye onto a polyvinyl alcohol-based resin film. Onto at least one side of this polarizing element, a protection film comprising triacetyl cellulose and the like is bonded through an adhesive layer to produce a polarizing plate, which is used in a liquid crystal display and the like. A polarizing plate using iodine as the dichromatic pigment is called an iodine-based polarizing plate, and on the other hand, a polarizing plate using the dichromatic dye as a dichromatic pigment is called the dye-based polarizing plate. Among them, the dye-based polarizing plate is characterized by having a high heat resistance, a high moist heat durability and a high stability, and having a high selectivity of the color by combination due to development of pigments having various colors although it has problems of low transmissivity, namely, low contrast to a polarizing plate having the same the polarization degree in comparison to the iodine-based polarizing plate.

Up to now, as a dye coloring a papermaking raw material and a cellulose-based fiber to colorfast blue, C. I. Direct Blue 15, 200, 202, 203 and the like are known, which are frequently used in the papermaking industry and the dye industry. However, common defects of these dyes when used as raw materials, are that dianisidine used as a main raw material is a toxic chemical substance corresponding to a specified chemical substance Class I, and that the pigment itself is also a dianisidine-based pigment, and thus it is essential to strictly comply Industrial Safety and Health Law in use of dianisidine, and necessary to work under very strict protection equipment, which is a great constraint with respect to management of the safety and health, and improvement of the productivity.

On the other hand, as other blue dyes than dianisidine, there are, for example, C. I. Direct Blue 67, 78, 106, 108 and the like. However, any of them obviously has a poor dyeing affinity in comparison to the dianisidine-based blue dye. Namely, it is difficult to easily obtain a blue dye that is colorfast and has good dyeing affinity without use of dianisidine, and which have leaded to the situations that a blue dye using dianisidine is widely produced and used despite the facts that dianisidine is a toxic chemical substance corresponding to the specified chemical substance Class I, and protection equipment for a worker to avoid the exposure requires a great expense. Accordingly, it has been strongly desired for a long time to obtain a blue dye that is colorfast and has a good dyeing affinity without use of a raw material corresponding to the specified chemical substance such as dianisidine not only in the dye industry and the papermaking industry, but also in the development of a polarizing plate. Particularly, in the development of a polarizing element, it is very difficult for a polarizing plate to have a high polarizing property as a premise, and in addition, have a polarizing function, color and durability in combination.

In addition, in recent years, as the intensity of a light source for optical use increases, such intense light, and heat generated therefrom have leaded to a problem of discoloration of a polarizing plate, and thus, demand for improvement thereof is high.

### Citation List

#### Patent Literature

Patent Literature 1: JP 64-5623 B
Patent Literature 2: JP 2985408 B1
Patent Literature 3: JP 2004-075719 A
Patent Literature 4 : JP 5-53015 A
Patent Literature 5 : US 5 354 512 A

#### Non-Patent Literature

Non-Patent Literature 1: Dye chemistry; Written by Hosoda Yutaka

Summary of Invention

Problem to be solved

Patent Literature 1 discloses a usable blue dye without use of a raw material belonging to the specified chemical substance such as dianisidine. In addition, Patent Literature 2 discloses a polarizing plate obtained by incorporating the patent disclosed in Patent Literature 1 into a polyvinyl alcohol film and stretching the film.

However, the pigment used in Patent Literature 1 or 2 has problems that it has low purity of the pigment, includes many impurities, and has a low polarizing property for the purpose of use for a polarizing element.

Patent Literature 4 discloses azo compounds having three azo bonds within the molecule.

Patent Literature 5 discloses a dye-containing polarizing film comprising a polarizing film material and a metal-containing azo dye and a method for producing said polarizing film comprising a dyeing step at 50 to 70 °C, which is followed by a stretching step.

Solution to Problem

The inventors investigated the impurities contained in the pigment in detail, and as a result, have found that a compound represented by Formula (2) generated as impurities when producing a pigment represented by Formula (1) is a cause for deterioration of the polarization degree of the film, and have completed the invention.

[Chemical Formula 1]

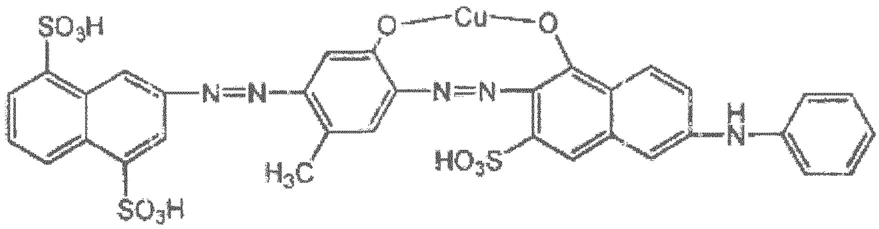

(1)

[Chemical Formula 2]

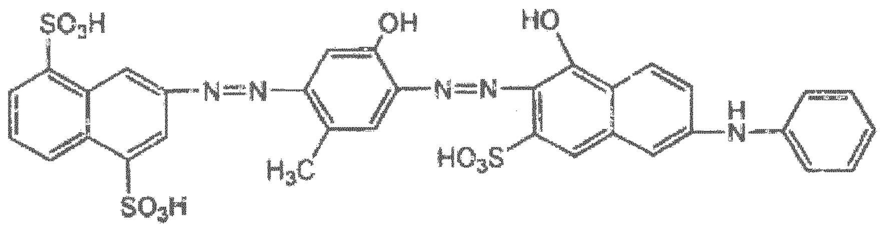

(2)

Namely, the invention relates to the followings: (1) A method of producing a polarizing element according to claim 1.

Effects of Invention

The polarizing element or the polarizing plate produced by the method of the invention that contains dichromatic pigments in a polyvinyl alcohol resin or a derivative thereof has a good polarizing property by using a blue dye that is colorfast and has a good dyeing affinity without use of a raw material corresponding to a specified chemical substance such as dianisidine.

Detailed Description of the Invention

Hereinafter, the invention is described in detail. Furthermore, in the following, a compound of Formula (1) or a salt thereof is referred to as the "pigment of Formula (1)", and in addition, a compound of Formula (2) or a salt thereof is referred to as the "pigment of Formula (2)".

The polarizing element obtained by the method of the invention is a film containing dichromatic pigments in a polyvinyl alcohol resin or a derivative thereof, and having been stretched at a stretch ratio of at least three times, wherein at least one of the dichromatic pigments is a pigment represented by Formula (1). The pigment represented by Formula

(1) has a good polarizing property, but the pigment represented by Formula (2) contained as impurities greatly deteriorates the polarizing property when contained in the film. Therefore, the pigment represented by Formula (2) is within 10%, preferably within 5%, more preferably within 3%, and further preferably within 1% of the total amount of the compound of Formula (1) and the compound of Formula (2).

Meanwhile, "the content" of the pigments is a ratio measured with the area ratio by high performance liquid chromatography (hereinafter, abbreviated as HPLC), and represents the ratio with respect to the total amount of the compound of Formula (1) and the compound of Formula (2). More specifically, the content may be a ratio represented by a peak area ratio obtained by dipping 0.5 g of a polyvinyl alcohol resin containing dichromatic pigments into 50 weight% of pyridine water for 24 hours, extracting the pigments, and then measuring with HPLC.

In addition, the concentration of tne pigments represented by Formula (2) in the pigment represented by Formula (1) is 10% or less in the area ratio when the pigment represented by Formula (1) is dissolved in water and the solution is measured with HPLC. The pigments represented by Formula (2) are impurities generated in the process of producing Formula (1), or in the process of producing the polarizing element, and are mainly generated when copper contained in the pigment of Formula (1) is separated. Therefore, it is preferred that the content of the pigments of Formula (2) is low. The purity of the pigment of Formula (1) used in a production of the polarizing element or the polarizing plate may be 90% or more, preferably 95% or more, and more preferably 98% or more. Accordingly, the ratio of the pigment of Formula (1) to the pigment of Formula (2) is preferably 9 : 1 to 10 : 0.

The pigment of Formula (1) can be easily produced by performing a known diazotization and coupling in accordance with an ordinary method of producing an azo dye as described in Non-Patent Literature 1. As a specific production method, 2-aminonaphthalen-4,8-disulfonic acid (conventional name: C acid) is diazotized with a known method, and subsequently subjected to coupling with para-cresidine at 10 to 20°C, and hydrolyzed as necessary to obtain an aminoazo compound represented by Formula (3).

[Chemical Formula 5]

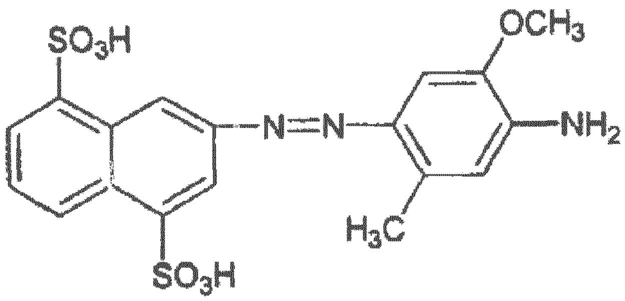

(3)

Formula 3

Then, the aminoazo compound represented by Formula (3) is diazotized with a known method, and subjected to alkali coupling with 6-phenylaminol-naphthol-3-sulfonic acid (conventional name: J acid) at 10 to 20°C to obtain a disazo compound represented by Formula (4).

[Chemical Formula 6]

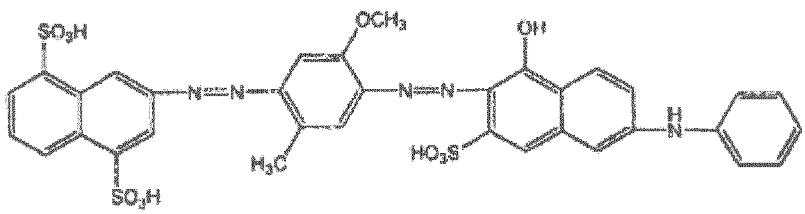

(4)

Formula 4

Then, for example, copper sulfate, and ammonia water, amino alcohol and hexamethylene tetramine are added, and copperization reaction is performed at 85 to 95°C to obtain a solution containing the pigment represented by Formula (1).

Then, this solution is evaporated to dryness, or salted out, filtered and dried, and crushed to obtain pulverized pigments represented by Formula (1). Tetrakis compound obtained in this manner is represented by Formula (1) and is generally used as a sodium salt, but may be also used as a lithium salt, a potassium salt, an ammonium salt, an alkyl amine salt, or the like.

Examples of the cause for generation of the pigments of Formula (2) include temperature at the time of the evaporation to dryness, solution at the time of the salting out, concentration of the solution, time until the pigments are generated, and the like. The pigments of Formula (2) can be also generated due to the processes such as dyeing temperature, dyeing time, drying temperature after stretch, and drying time described below even at the time of production of the polarizing element. The pigments represented by Formula (2) have a low polarizing property, and have respective wavelengths having the lowest transmissivity in the transmissivity obtained when two pieces of polarizing plates of a polarizing element containing Formula (1) are superimposed such that the absorption-axis directions orthogonally intersect with each other, and in the transmissivity obtained when two pieces polarizing plates of a polarizing element containing Formula (1) and Formula (2) are superimposed such that the absorption-axis directions orthogonally intersect with each other. Furthermore, when Formula (2) is contained, the color is not blue, but the redness increases, and thus the color becomes violet or close color thereto. When a polarizing element having a good polarizing property is obtained, and a blue polarizing plate is desired, the content of Formula (2) in the polarizing element needs to be within 10% with respect to Formula (1). If Formula (2) is contained in 10% or more, a good polarizing property or a desirable blue is not obtained. Therefore, the content of the pigment represented by Formula (2) is lower.

The pigment represented by Formula (1) may be used in combination with other organic pigments such that hue correction and polarizing performance can be improved. The organic pigment used in this case may be any pigment having an absorption property in a different wavelength region from the absorption wavelength region of the pigment used in the invention, and having the high polarizing property. Such a pigment is not particularly limited to dichromatic dye, and may be those dyeing a hydrophilic polymer. Examples of the dichromatic dye include azo-based, anthraquinone-based, and quinophthalone-based dichromatic dyes, and also include pigments described in a color index. Examples of the dichromatic dye include C. I. Direct. Yellow 12, C. I. Direct. Yellow 28, C. I. Direct. Yellow 44, C. I. Direct. Orange 26, C. I. Direct. Orange 39, C. I. Direct. Orange 107, C. I. Direct. Red 2, C. I. Direct. Red 31, C. I. Direct. Red 79, C. I. Direct. Red 81, C. I. Direct. Red 247, C. I. Direct. Green 80, C. I. Direct. Green 59, and the organic dyes described in JP 2001-33627 A, JP 2002-296417 A, JP 2003-215338 A, WO 2004/092282, JP 2001-0564112 A, JP 2001-027708 A, JP 11-218611 A, JP 11-218610 A, and JP 60-156759 A. Such organic dyes may be used as a free acid, and in addition, may be used as an alkali metal salt (for example, Na salt, K salt, Li salt), an ammonium salt, or a salt of amines . However, the dichromatic dye is not limited to these, and a known dichromatic compound may be used, which is preferably an azo-based dye. In addition to the dichromatic dyes described above, other organic dyes may be used in combination as necessary.

The kind of the organic dye combined varies depending on the intended polarizing element, which may be a polarizing element of neutral color, a color polarizing element for a liquid crystal projector, or another color polarizing element, respectively. The combination ratio is not particularly limited, and the combination amount may be arbitrarily set according to a light source, a durability, required hue, and the like.

The pigment represented by Formula (1) is impregnated into a polyvinyl alcohol-based resin film, which is a feature of the method of the invention. A method of producing the polyvinyl alcohol-based resin constituting the polarizing element is not particularly limited, and the polyvinyl alcohol-based resin can be produced with a known method. The method of producing the polyvinyl alcohol-based resin includes, for example, saponification of a polyvinyl acetate-based resin to obtain a polyvinyl alcohol-based resin. Examples of the polyvinyl acetate-based resin include polyvinyl acetate, which is a homopolymer of vinyl acetate, and in addition, a copolymer of vinyl acetate and another monomer copolymerizable with vinyl acetate, and the like. Examples of the other monomer copolymerizable with vinyl acetate include, for example, unsaturated carboxylic acids, olefins, vinyl ethers, unsaturated sulfonic acids, or the like. The saponification degree of the polyvinyl alcohol-based resin is ordinarily, preferably 85 to 100 mole%, and more preferably 95 mole% or more. This polyvinyl alcohol-based resin may be further modified. For example, polyvinyl formal, polyvinyl acetal, and the like modified with aldehydes may be also used. In addition, the polymerization degree of the polyvinyl alcohol-based resin is ordinarily, preferably 1,000 to 10,000, and more preferably 1,500 to 6,000.

A film produced from such polyvinyl alcohol-based resin is used as a raw film. A method of producing a film from the polyvinyl alcohol-based resin is not particularly limited, and the film may be produced with a known method. The polyvinyl alcohol-based resin film can contain glycerin, ethylene glycol, propylene glycol or low molecular polyethylene glycol and the like as a plasticizer. The amount of the plasticizer is preferably 5 to 20 weight%, and more preferably 8 to 15 weight%. The thickness of the raw film that comprises the polyvinyl alcohol-based resin is not particularly limited, but is preferably, for example, 5 to 150 μm, and more preferably 10 to 100 μm.

The polyvinyl alcohol-based resin film preferably first undergoes a swelling process. The swelling process is performed by dipping the polyvinyl alcohol-based resin film into a 20 to 50°C solution for 30 seconds to 10 minutes. The solution is preferably water. The swelling process may be skipped if it is desired to shorten the time to produce the

polarizing element, as the polyvinyl alcohol-based resin film swells up also at the time of dye treatment of the pigments.

A dyeing process is performed after the swelling process . In the dyeing process, impregnation is performed by dipping the polyvinyl alcohol-based resin film into a solution containing the dichromatic dye. The temperature of the solution in this process is 5 to 60°C, more preferably 20 to 50°C, and particularly preferably 35 to 50°C. The dipping time to the solution may be suitably regulated, but is preferably regulated to 30 seconds to 20 minutes, and more preferably to 1 to 10 minutes.

The solution containing the dichromatic dye may contain sodium chloride, sodium sulfate, sodium sulfate anhydride, sodium tripolyphosphate, and the like as a dyeing assistant. The content of the dyeing assistant may be adjusted to any concentration by the time or the temperature depending on the dye-affinity of the dye, but is preferably 0 to 5 weight%, and more preferably 0.1 to 2 weight%.

The pigment impregnation is performed by dipping the polyvinyl alcohol-based resin film into a solution containing the dichromatic pigments.

After the dyeing process, a washing process (hereinafter, referred to as a washing process 1) can be performed before proceeds to the next. The washing process 1 is a process of washing a dye solvent adhering to the surface of the polyvinyl alcohol-based resin film in the dyeing process. By performing the washing process 1, it is possible to suppress the dye from migration into the liquid to be treated in the following process. Water is generally used in the washing process 1. A washing method is preferably performed by dipping the polyvinyl alcohol-based resin film into the solution, but may be also performed by applying the solution onto the polyvinyl alcohol-based resin film. The washing time is not particularly limited, but preferably 1 to 300 seconds, and more preferably 1 to 60 seconds. The temperature of the solvent in the washing process 1 is necessarily a temperature where a hydrophilic polymer is not dissolved. The washing treatment is generally performed at 5 to 40°C.

After the dyeing process or the washing process 1, a process of incorporating a crosslinking agent and/or a water-resistant additive may be performed. As the crosslinking agent, tor example, a boron compound such as boric acid, borax or ammonium borate; a multivalent aldehyde such as glyoxal or glutaraldehyde; a multivalent isocyanate-based compound such as a biuret type, an isocyanurate type or a block type; a titanium-based compound such as titanium oxysulfate; or the like may be used, but ethylene glycol glycidyl ether, polyamide epichlorohydrin, or the like may be used in addition. Examples of the water-resistant additive include succinic acid peroxide, ammonium persulfate, calcium perclorate, benzoin ethyl ether, ethylene glycol diglycidyl ether, glycerin diglycidyl ether, ammonium chloride or magnesium chloride and the like, but boric acid is preferably used. Using at least one or more kinds of the crosslinking agent and/or the water-resistant additive described above, a process of incorporating the crosslinking agent and/or the water-resistant additive is performed. The solvent at this time is preferably water, but is not limited thereto. The content concentration of the crosslinking agent and/or the water-resistant additive in the solvent in the process of incorporating the crosslinking agent and/or the water-resistant additive is preferably, for example, 0.1 to 6.0 weight%, and more preferably 1.0 to 4.0 weight% of the concentration with respect to the solvent for boric acid. The temperature of the solvent in this process is preferably 5 to 70°C, and more preferably 5 to 50°C. A method of incorporating the crosslinking agent and/or the water-resistant additive into the polyvinyl alcohol-based resin film is preferably dipping the polyvinyl alcohol-based resin film into the solution, but the solution may be also applied or coated onto the polyvinyl alcohol-based resin film. The treatment time in this process is preferably 30 seconds to 6 minutes, and more preferably 1 to 5 minutes. However, the crosslinking agent and/or the water-resistant additive are not necessarily incorporated, and this treatment process may be skipped when it is desired to shorten the time, or when cross-linking treatment or water-resistant treatment is unnecessary.

A stretch process is performed after performing the dyeing process, the washing process 1, or the process of incorporating the crosslinking agent and/or the water-resistant additive. The stretch process is a process of stretching the polyvinyl alcohol-based film monoaxially. The stretch method is a wet stretch, and the stretch ratio may be 3 times or more from the initial length to achieve the invention. The stretch ratio may be 3 times or more, preferably 5 times to 7 times from the initial length.

The stretch treatment is performed while dipping the polyvinyl alcohol-based resin film in the solution containing the crosslinking agent and/or the water-resistant additive. As the crosslinking agent, for example, a boron compound such as boric acid, borax or ammonium borate; a multivalent aldehyde such as glyoxal or glutaraldehyde; a multivalent isocyanate-based compound such as a biuret type, an isocyanurate type, or a block type; a titanium-based compound such as titanium oxysulfate; or the like may be used. In addition, ethylene glycol glycidyl ether, polyamide epichlorohydrin, or the like may be used. Examples of the water-resistant additive include succinic acid peroxide, ammonium persulfate, calcium perclorate, benzoin ethyl ether, ethylene glycol diglycidyl ether, glycerin diglycidyl ether, ammonium chloride, magnesium chloride, or the like. The stretch is performed in a solution containing at least one or more kinds of the crosslinking agent and/or the water-resistant additive described above. The crosslinking agent is preferably boric acid. The concentration of the crosslinking agent and/or the water-resistant additive in the stretch process is preferably, for example, 0.5 to 15 weight%, and more preferably 2.0 to 8.0 weight% . The stretch ratio is preferably 2 to 8 times, and more preferably 5 to 7 times. The stretch temperature is 40 to 60°C, and more preferably 45 to 58°C. The stretch time

is ordinarily 30 seconds to 20 minutes, and more preferably 2 to 5 minutes. The wet stretch process may be performed by stretch in one stage, but may be also performed by stretch in multi-stages of two or more stages.

A washing process of washing the film surface (hereinafter, referred to as the washing process 2) may be performed after performing the stretch process, as a precipitate of the crosslinking agent and/or the water-resistant additive, or a foreign substance may adhere to the film surface. The washing time is preferably 1 second to 5 minutes. The washing method is preferably performed by dipping in a washing solution, but may be performed by applying or coating the solution onto the polyvinyl alcohol-based resin film. The washing treatment may be performed in one stage, or may be performed in multi-stages of two or more stages. The solution temperature of the washing process is not particularly limited, but ordinarily 5 to 50°C, and preferably 10 to 40°C.

Examples of the solvent used in the treatment processes hereto include, for example, solvents such as water, dimethyl sulfoxide, N-methyl pyrrolidone, alcohols such as methanol, ethanol, propanol, isopropyl alcohol, glycerin, ethylene glycol, propylene glycol, diethylene glycol, triethylene glycol, tetraethylene glycol or trimethylol propane, and amines such as ethylene diamine or diethylene triamine, but are not limited thereto. In addition, a mixture of one or more kinds of these solvents may be used. The solvent is most preferably water.

A dry process of the film is performed after the stretch process or the washing process 2. The dry treatment may be performed by natural drying, or removal of moisture on the surface by compression by a roll or an air knife, a water-absorbing roll, or the like may be performed in order to enhance the dry efficiency, and/or ventilation drying may be performed. The temperature for tne dry treatment is 20 to 70°C, and more preferably 60 to 70°C. The time for the dry treatment may be 30 seconds to 20 minutes, but is preferably 5 to 10 minutes.

By the method described above, it is possible to obtain the polyvinyl alcohol-based resin film polarizing element of the invention that is improved in the durability. A similar polarizing element, which is not part of the present invention, may be produced by incorporating the dichromatic dye into a film obtained from an amylose-based resin, a starch-based resin, a cellulose-based resin, a polyacrylic acid salt-based resin and the like, and stretching and orientating the hydrophilic resin in the share orientation and the like, although the film onto which the dichromatic dye is adsorbed in the polarizing element, is not a polyvinyl alcohol-based resin. However, the polarizing element film that comprising the polyvinyl alcohol-based resin film obtainable according to the process of the present invention is most suitable.

The polarizing element obtained by the claimed process is disposed with a transparent protection layer on one side, or both sides thereof, whereby to produce a polarizing plate. The transparent protection layer may be disposed as a coating layer of a polymer, or a laminate layer of the film. The transparent polymer or the film forming the transparent protection layer is preferably a transparent polymer or film having a high mechanical intensity and good heat stability. Examples of the substance used as a transparent protection layer include cellulose acetate resins or films thereof such as triacetyl cellulose and diacetyl cellulose, acrylic resins or films thereof, polyvinyl chloride resins or films thereof, Nylon resins or films thereof, polyester resins or films thereof, polyarylate resins or films thereof, cyclic polyolefin resins or films thereof of having a cyclic olefin such as norbornene as a monomer, polyolefins or copolymers having polyethylene, polypropylene, or a cyclo-based or norbornene skeleton, resins or polymer or films having imide and/or amide as the main chain or the side chain, and the like. In addition, resins or films thereof having mesomorphism may be disposed as a transparent protection layer. The thickness of the protection film is, for example, about 0.5 to 200 μm. The same kind or different kind of the resins or films thereof described above may be disposed on one side, or both sides in one or more layers, whereby to produce the polarizing plate.

In order to bond the transparent protection layer to the polarizing element, an adhesive is necessary. The adhesive is not particularly limited, but is preferably a polyvinyl alcohol-based adhesive. Examples of the polyvinyl alcohol-based adhesive include Gohsenol NH-26 (manufactured by The Nippon Synthetic Chemical Industry Co., Ltd.), Exceval RS-2117 (manufactured by KURARAY CO., LTD.) and the like, but are not limited thereto. The adhesive may be added with the crosslinking agent and/or the water-resistant additive. As the polyvinyl alcohol-based adhesive, a maleic anhydride-isobutylene copolymer is used, and an adhesive mixed with a crosslinking agent may be used as necessary. Examples of the maleic anhydride-isobutylene copolymer include ISOBAM #18 (manufactured by KURARAY CO., LTD.), ISOBAM #04 (manufactured by KURARAY CO., LTD.), ammonia-modified ISOBAM #104 (manufactured by KURARAY CO., LTD.), ammonia-modified ISOBAM #110 (manufactured by KURARAY CO., LTD.), imidized ISOBAM #304 (manufactured by KURARAY CO., LTD.), imidized ISOBAM #310 (manufactured by KURARAY CO., LTD.) and the like. At this time, as the crosslinking agent, a water-soluble multivalent epoxy compound may be used. Examples of the water-soluble multivalent epoxy compound include DENACOL EX-521 (manufactured by Nagase Chemtex Corporation), TETRAD-C (manufactured by Mitsubishi Gas Chemical Company, Inc.) and the like. In addition, as the other adhesive other than the polyvinyl alcohol-based resin, a known adhesive such as urethane-based, acrylic-based, or epoxy-based may be also used. In addition, for the purpose of improving the adhesion force of the adhesive or improving the water resistance, an additive such as a zinc compound, a chloride, and an iodide may be incorporated at the same time in about 0.1 to 10 weight% of the concentration. The additive is not limited. After bonding the transparent protection layer with the adhesive, dry or heat treatment is performed at a suitable temperature to obtain a polarizing plate.

The obtained polarizing plate may be disposed with various functional layers for improvement of the view angle

and/or improvement of the contrast, or a layer or film having improved brightness on the surface of the protection layer or the film that becomes a non-exposed surface later, especially when the polarizing plate is bonded to a display device of liquid crystal, organic electroluminescence, or the like. In bonding the polarizing plate to the film or the display device, an adhesive is preferably used.

This polarizing plate may have well-known various functional layers such as an anti-reflective layer, an anti-glare layer, a hard coat layer on the other surface, namely, the exposed surface of the protection layer or the film. A coating method is preferred in a production of this layer having various functions, but the film having the function may be also bonded through an adhesive or a bonding agent. In addition, the various functional layers may be a layer or film controlling the phase difference.

With the method described above, it is possible to obtain the pigment for the method of the present invention comprising an excellent blue dye without use of a raw material corresponding to the specified chemical substance such as dianisidine, and a polarizing element, and a polarizing plate having a good polarizing property and a high durability. A display using tne polarizing element obtained according to the invention or the polarizing plate obtainable therefrom can provide high reliability, high contrast over a long time, and high color reproducibility.

The thus-obtained polarizing element or polarizing plate is disposed with a protection layer, or a function layer and a support, or the like as necessary, and is used in a liquid crystal projector, a calculator, a clock, a notebook computer, a word processor, a liquid crystal television, a polarizing lens, polarizing glasses, a car navigation and an indoor-outdoor measuring instrument, a display device, or the like as a polarizing plate bonded with a protection film.

## Examples

Hereinafter, the invention is further described in detail with Examples. Meanwhile, evaluations for the transmissivity and the polarization degree shown in Examples were performed as described below.

The transmissivity when two pieces of polarizing plates obtained by bonding a protection film onto both sides of a polarizing element are superimposed such that the absorption-axis directions are identical, was assumed to be the parallel position transmissivity Tp, whereas the transmissivity when two pieces of the polarizing plate are superimposed such that the absorption axis directions orthogonally intersect, was assumed to be the orthogonal position transmissivity Tc.

The polarization degree Py was obtained with the equation below from the parallel position transmissivity Tp and the orthogonal position transmissivity Tc.

$$Py = \{(Tp - Tc)/(Tp + Tc)\}1/2 \times 100$$

Each of the transmissivities was measured using a spectrophotometer ["U-4100" manufactured by Hitachi, Ltd.].

## Synthesis Example 1

<Production of pigment solution>

32.5 Parts of 2-aminonaphthalen-4,8-disulfonic acid (conventional name: C acid) were dissolved in 145 parts of water, and were added to 140 parts of water containing 26 parts of 35% hydrochloric acid, and 6.9 parts of sodium nitrite were added thereto at 15 to 20°C and the mixture was diazotized over one hour. Then, an aqueous solution comprising 13.7 parts of para-cresidine and 17.5 parts of 35% hydrochloric acid was added, and coupling was performed at 20°C over 4 hours until para-cresidine was not recognized with the spot test while keeping pH to 3.0 to 3.5 with sodium acetate. Then, to this aminoazo compound, 21.4 parts of 35% hydrochloric acid were added, and 6.9 parts of sodium nitrite were added at 10°C, and a second diazotization was performed at 15 to 20°C over 2 to 3 hours . Then, this was added to an aqueous solution comprising 31.5 parts of phenyl J acid, 125 parts of water and 11 parts of soda ash, and further a solution of soda ash was poured to keep pH to 8.5 to 9.5, and second coupling was performed at 20°C over 3 hours until the diazotization product was not recognized with the spot test, to obtain a disazo compound. Then, 30.5 parts of monoethanol amine were added to an aqueous solution of 25 parts of copper sulfate, and the produced copper complex salt was added and copperization reaction was performed at 95°C 10 over hours until an unreacted substance was not recognized on a thin layer chromatography, to produce a solution containing 20 weight% of the pigment represented by Formula (1) of the present invention.

Example 1

<Production of polarizing element>

A polyvinyl alcohol-based resin film having a saponification degree of 99% or more and a thickness of 75 μm (VF series manufactured by KURARAY CO., LTD.) was dipped into 40°C warm water for 2 minutes to perform a swelling treatment. The swelling-treated film was salted out in an aqueous solution of 20 weight% of the pigment represented by Formula (1) with 25 weight% of Sanuki salt, and dipped into a 45°C aqueous solution containing 0.05 weight% of pigment powders (98.2% HPLC purity) dried at 60°C and 0.1 weight% of sodium tripolyphosphate, to perform adsorption of the dyes. The film adsorbed with the dyes was washed with water, and after the washing, boric acid treatment was performed with a 40°C aqueous solution containing 2 weight% of boric acid for 1 minute. The obtained boric acid-treated film was treated in a 55°C aqueous solution containing 3.0 weight% of boric acid for 5 minutes while being stretched to 5.0 times. Washing was performed for 15 seconds with 30°C water with keeping the tension state of the obtained, boric acid-treated film. The dry treatment was immediately performed for the obtained treated film at 70°C for 9 minutes to obtain a polarizing element of 28 μm thickness.

The obtained polarizing element was dissolved, and the HPLC measurement was performed, and the purity of the pigments represented by Formula (1) in the film was 99.2%.

The obtained polarizing element and an alkali-treated triacetyl cellulose film having a thickness of 80 μm (TD-80U manufactured by FUJIFILM Corporation, abbreviated as TAC below) were laminated using a polyvinyl alcohol-based adhesive in the constitution of the polarizing element/adhesive layer/TAC, to obtain a polarizing plate as a laminate. The obtained polarizing plate was cut to 40 mm × 40 mm, and bonded to a 1 mm transparent glass plate through an adhesive PTR-3000 (manufactured by NIPPON KAYAKU Co., Ltd) in the constitution of the polarizing element/adhesive layer/TAC/adhesive layer/transparent glass plate to obtain an evaluation sample.

Comparative Example 1

Production of a polarizing element was performed in a similar manner except that a solution containing 20 weight% of the pigments represented by Formula (1) used in Example 1 was salted out with 25 weight% of Sanuki salt, and pigment powders dried at 90°C of the drying temperature (87.9% HPLC purity) was used. The dried pigment powders contained 7.5% of the pigments represented by Formula (2). In addition, the obtained polarizing element was dissolved, and the HPLC measurement was performed, and the purity of the pigments represented by Formula (1) in the film was 88.7%.

Table 1 illustrates the wavelength having the maximum polarization degree, and the parallel transmissivity and the orthogonal transmissivity at the wavelength, the polarizing property, and the contrast representing light and shade, which is calculated by dividing the parallel transmissivity with the orthogonal transmissivity of the evaluation samples obtained in Examples and Comparative Examples.

[Table 1]

| | Wavelength representing maximum polarization degree | Parallel transmissivity | Orthogonal transmissivity | Polarizing degree | Contrast |
|---|---|---|---|---|---|
| Example 1 | 620 | 28.27 | 0.040 | 87.1 | 701 |
| Comparative Example 1 | 620 | 28.41 | 0.155 | 85.2 | 183 |

As listed in Table 1, it is understood that the polarizing plate obtained by the method of the invention shows high polarization degree, and high contrast whereas Comparative Example has lower polarization degree by about 2%, and has lower contrast by about one-fourth. These results show that the polarizing plate of Example 1 has high polarizing degree, and makes it possible to obtain a liquid crystal display equipment, and a lens, and the like having high contrast and a high stability by being used in a liquid crystal projector, a calculator, a clock, a notebook computer, a word processor, a liquid crystal television, a polarizing lens, polarizing glasses, a car navigation and an indoor-outdoor measuring instrument, a display device, and the like without use of a pigment belonging to the specified chemical substance such as dianisidine.

## Claims

1. A method of producing a polarizing element that comprises a film of a polyvinyl alcohol resin or a derivative thereof containing dichromatic pigments and having been stretched at a stretch ratio of at least three times, the method comprising
a step of dyeing a polyvinyl alcohol-based resin film by dipping the film into a solution containing the dichromatic dye at 5 to 60°C;
a step of stretching the polyvinyl alcohol-based resin film monoaxially at 40 to 60 °C while dipping the polyvinylalcohol-based resin film in a solution containing a crosslinking agent and/or a water-resistant additive; and
a step of drying the polyvinyl alcohol-based resin film at 20 to 70 °C,
wherein the content ratio of an azo compound represented by Formula (1) or a salt thereof, which is contained as one of the dichromatic pigments, to an azo compound represented by Formula (2) or a salt thereof, which is contained as one of the dichromatic pigments, is 9 : 1 to 10 : 0,
wherein the content of the azo compound is based on a ratio represented by a peak area ratio obtained by dipping 0.5 g of a polyvinylalcohol resin containing dichromatic pigments into 50 weight% of pyridine water for 24 hours, extracting the pigments, and then measuring with high performance liquid chromatography (HPLC).

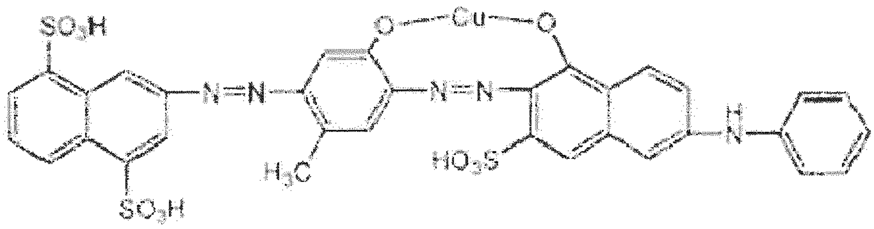

(1)

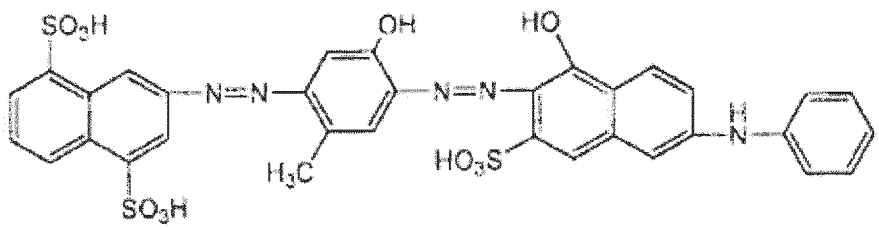

(2)

## Patentansprüche

1. Verfahren zur Herstellung eines Polarisationselements, das einen Film aus einem Polyvinylalkoholharz oder einem Derivat davon, das dichromatische Pigmente enthält und bei einem Streckverhältnis von mindestens dem Dreifachen gestreckt wurde, umfasst, wobei das Verfahren umfasst
einen Schritt des Färbens eines Harzfilms auf Polyvinylalkohol-Basis durch Eintauchen des Films in eine Lösung, die den dichromatischen Farbstoff enthält, bei 5 bis 60 °C;
einen Schritt des monoaxialen Streckens des Harzfilms auf Polyvinylalkohol-Basis bei 40 bis 60 °C, während der Harzfilm auf Polyvinylalkohol-Basis in eine Lösung eingetaucht wird, die ein Vernetzungsmittel und/oder ein wasserbeständiges Additiv enthält; und
einen Schritt des Trocknens des Harzfilms auf Polyvinylalkohol-Basis bei 20 bis 70 °C,
wobei das Gehaltsverhältnis einer durch Formel (1) dargestellten Azoverbindung oder eines Salzes davon, die/das als eines der dichromatischen Pigmente enthalten ist, zu einer durch Formel (2) dargestellten Azoverbindung oder einem Salz davon, die/das als eines der dichromatischen Pigmente enthalten ist, 9 : 1 bis 10 : 0 beträgt,
wobei der Gehalt der Azoverbindung auf einem Verhältnis beruht, das durch ein Peakflächenverhältnis dargestellt wird, das durch Eintauchen von 0,5 g eines Polyvinylalkoholharzes, das dichromatische Pigmente enthält, in 50 Gew.-% Pyridinwasser für 24 Stunden, Extrahieren der Pigmente und dann Messen mit Hochleistungsflüssigkeitschromatographie (HPLC) erhalten wurde.

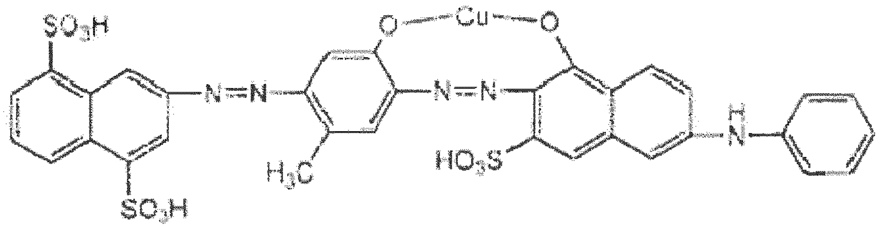

(1)

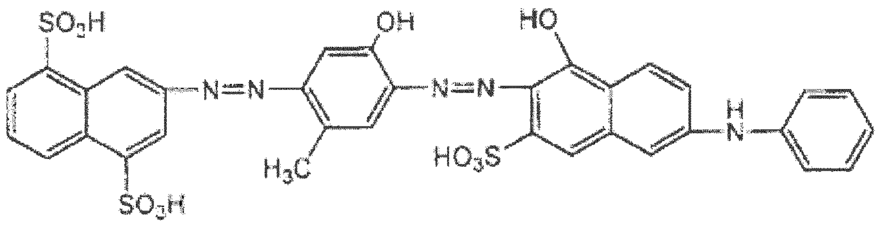

(2)

## Revendications

1. Procédé de fabrication d'un élément polarisant qui comprend un film d'une résine d'alcool polyvinylique ou d'un dérivé de celui-ci contenant des pigments dichromatiques et ayant été étiré selon un taux d'étirement d'au moins trois fois, le procédé comprenant
une étape de teinture d'un film de résine à base d'alcool polyvinylique en plongeant le film dans une solution contenant le colorant dichromatique à une température de 5 à 60 °C;
une étape d'étirement du film de résine à base d'alcool polyvinylique de manière monoaxiale à une température de 40 à 60 °C tout en plongeant le film de résine à base d'alcool polyvinylique dans une solution contenant un agent de réticulation et/ou un additif résistant à l'eau ; et
une étape de séchage du film de résine à base d'alcool polyvinylique à une température de 20 à 70 °C,
dans lequel le ratio de teneurs d'un composé azoïque représenté par la formule (1) ou d'un sel de celui-ci, qui est contenu en tant qu'un des pigments dichromatiques, par rapport à un composé azoïque représenté par la formule (2) ou un sel de celui-ci, qui est contenu en tant qu'un des pigments dichromatiques, est de 9:1 à 10:0,
dans lequel la teneur du composé azoïque est basée sur un ratio représenté par un ratio d'aire de pic obtenu en plongeant 0,5 g d'une résine d'alcool polyvinylique contenant des pigments dichromatiques dans 50 % en poids d'eau pyridine pendant 24 heures, en extrayant les pigments et en mesurant ensuite par chromatographie liquide haute performance (HPLC).

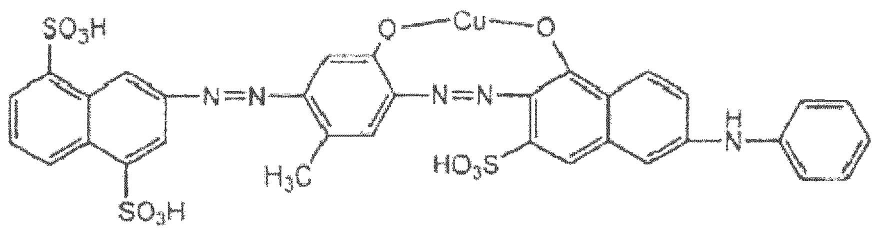

(1)

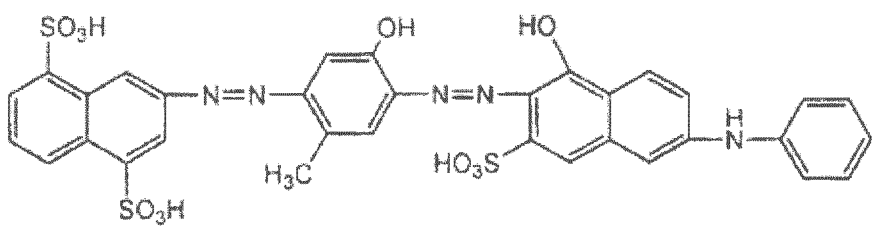

(2)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 645623 B
- JP 2985408 B
- JP 2004075719 A
- JP 5053015 A
- US 5354512 A
- JP 2001033627 A
- JP 2002296417 A
- JP 2003215338 A
- WO 2004092282 A
- JP 2001564112 A
- JP 2001027708 A
- JP 11218611 A
- JP 11218610 A
- JP 60156759 A